# EUROPEAN PATENT APPLICATION

(11) **EP 3 182 694 A1**
(43) Date of publication of application: **21.06.2017**
(21) Application number: 16002529.2
(22) Date of filing: 29.11.2016
(51) Int. Cl.: H04N 5/232, H04N 5/247, H04N 5/222

(54) **INFORMATION PROCESSING APPARATUS, INFORMATION PROCESSING METHOD, AND COMPUTER-READABLE STORAGE MEDIUM**

(30) Priority: 14.12.2015 JP 2015243510
(71) Applicant: Canon Kabushiki Kaisha, Ohta-ku Tokyo (JP)
(72) Inventor: Mitsumoto, Shinichi, Tokyo (JP)
(74) Representative: WESER & Kollegen

(57) **Abstract**

An information processing apparatus includes: acquisition means configured to acquire positional relationship information regarding a positional relationship between a first predetermined object and a second predetermined object detected from at least one of captured images captured by a plurality of cameras for capturing images of a subject from a plurality of directions; camera decision means (404) configured to decide on at least one camera that captures an image to be displayed from among the plurality of cameras by using the positional relationship information of the first and second predetermined objects acquired by the acquisition means; and transmission control means (191) configured to perform control so that a display-target image based on a captured image captured by the at least one camera decided by the camera decision means (404) is transmitted to a display device (195).

## Description

### BACKGROUND OF THE INVENTION

### Field of the Invention

The present invention relates to a system that includes a plurality of cameras for capturing images of a subject from a plurality of directions.

### Description of the Related Art

In recent years, there have been some cases where many cameras tilted at various angles are installed in a stadium to view video images from various viewpoints. To use such video images in broadcasting or distribution with a limited bandwidth, a camera's video image from a viewpoint that viewers want has to be selected from among video images captured by a plurality of cameras. However, it is difficult to select a video image from an appropriate viewpoint from among video images captured by many cameras.

Japanese Patent Laid-Open No. 2014-215828 discloses a method in which fixation point position information, camera position information, orientation information, and the like are provided for each camera and in which a camera's video image is selected on the basis of attribute information of a team or the like that a viewer likes.

However, it may be difficult to understand the situation of a game depending on the selected camera's video image. In the configuration described in Japanese Patent Laid-Open No. 2014-215828, for example, when video images of only a specific player are displayed on the basis of attribute information of the player, it may be difficult to understand the situation of a game.

### SUMMARY OF THE INVENTION

The present invention in its first aspect provides an information processing apparatus as specified in claims 1 to 10.

The present invention in its second aspect provides an information processing method as specified in claims 11 to 13.

The present invention in its third aspect provides a computer-readable storage medium as specified in claims 14 to 16.

Further features of the present invention will become apparent from the following description of exemplary embodiments with reference to the attached drawings.

### BRIEF DESCRIPTION OF THE DRAWINGS

Fig. 1 is a bird's-eye view of a stadium.
Figs. 2A and 2B illustrate examples of the configurations of a system and a table.
Figs. 3A and 3B illustrate a fourth embodiment.
Figs. 4A and 4B are block diagrams illustrating examples of the configurations of an information processing apparatus and a computer apparatus.
Fig. 5 is a flowchart illustrating a camera selection process performed by the information processing apparatus.
Figs. 6A and 6B illustrate one example of a ball position detection method and an angle of a straight line.
Fig. 7 is a flowchart illustrating a camera selection process performed by the information processing apparatus.
Fig. 8 is a flowchart illustrating a process of each of steps S507 and S508.
Fig. 9 illustrates step S805.
Fig. 10 illustrates step S509.
Figs. 11A to 11C illustrate camera switching.
Figs. 12A and 12B illustrate a position of a goal.
Fig. 13 is a flowchart illustrating a camera selection process performed by the information processing apparatus.
Fig. 14 illustrates a second embodiment.
Fig. 15 is a flowchart illustrating a camera selection process performed by the information processing apparatus.

### DESCRIPTION OF THE EMBODIMENTS

Embodiments of the present disclosure will be described below with reference to the attached drawings. Note that each embodiment described below represents one example of the case where the present disclosure is embodied, that is, one of specific practical examples of configurations described in the claims.

### First Embodiment

One example of an information processing apparatus connected to a plurality of image capturing apparatuses that capture images of a stadium will be described below. The information processing apparatus detects a position of a ball in the stadium and selects, as a selected image capturing apparatus, at least one image capturing apparatus from among the plurality of image capturing apparatuses on the basis of the relationship between the detected position of the ball and a position of a goal in the stadium. Then, the information processing apparatus outputs a video image captured by the selected image capturing apparatus selected from among the plurality of image capturing apparatuses.

Furthermore, an example will be described below in which the stadium is a stadium where a soccer game is played, and in which the information processing apparatus selects an appropriate image capturing apparatus from among the plurality of image capturing apparatuses that capture images of a soccer game on the basis of the relationship between a position of a ball and a position of a goal in the stadium. In this embodiment, to obtain a video image from which the same perspective as offensive players have can be obtained and a video image from which the same perspective as defensive players have can be obtained, respective appropriate image capturing apparatuses are selected. Specifically, an image capturing apparatus is selected so that, as a video image from which the same perspective as offensive players have can be obtained, a video image in which an opponent's goal is seen behind the ball can be obtained. Also, an image capturing apparatus is selected so that, as a video image from which the same perspective as defensive players have can be obtained, a video image in which the ball is seen from behind the goal can be obtained.

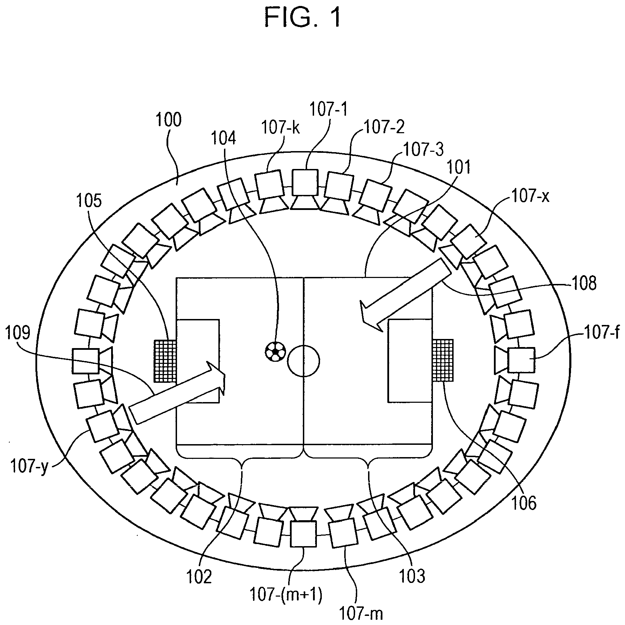

First, a stadium in which a system using an information processing apparatus according to this embodiment is installed will be described with reference to Fig. 1 illustrating a bird's-eye view of the stadium. A stadium 100 refers to the entirety of a stadium where mainly ball games are played, and a field 101 is a place where a game is played. The field 101 is divided into an area 102 on the left side of Fig. 1 and an area 103 on the right side of Fig. 1 with respect to a centerline. Around the field 101, a plurality of cameras (cameras 107-1 to 107-k) are installed so as to surround the field 101, and all of the plurality of cameras capture images of the inside of the field 101. A reference symbol k denotes a certain integer of 2 or more. Hereinafter, a group of cameras (cameras 107-1 to 107-m) provided on the right side of Fig. 1 (the same side as the area 103) from the centerline is called a camera group A. Also, a group of cameras (cameras 107-(m + 1) to 107-k) provided on the left side of Fig. 1 (the same side as the area 102) from the centerline is called a camera group B. A reference symbol m denotes a certain integer between 1 and k.

Now, as illustrated in Fig. 1, assume that a ball 104 is located in the area 102. At this time, as a camera that captures an image of a goal on an area 102 side (that is, a goal 105) over the ball 104, a camera 107-x whose image capturing direction (optical axis direction) is a direction from the ball 104 to the goal 105 (direction 108) is selected from among the camera group A. On the other hand, as a camera that captures an image of the ball 104 over the goal 105, a camera 107-y whose image capturing direction (optical axis direction) is a direction from the goal 105 to the ball 104 (direction 109) is selected from among the camera group B. Reference symbols x and y each denote a certain integer between 1 and k.

Furthermore, assume that the ball 104 is located in the area 103. At this time, as a camera that captures an image of a goal on an area 103 side (that is, a goal 106) over the ball 104, a camera whose image capturing direction (optical axis direction) is a direction from the ball 104 to the goal 106 is selected from among the camera group B. On the other hand, as a camera that captures an image of the ball 104 over the goal 106, a camera whose image capturing direction (optical axis direction) is a direction from the goal 106 to the ball 104 is selected from among the camera group A.

In each of the cameras 107-1 to 107-k, its optical axis is fixed, and horizontal or vertical movement, such as panning or tilting, is not performed. However, the cameras 107-1 to 107-k each have a zoom function of changing a focal length and are capable of zooming in or zooming out an image-capturing region. Video images captured by the cameras 107-1 to 107-k are transmitted to the information processing apparatus according to this embodiment.

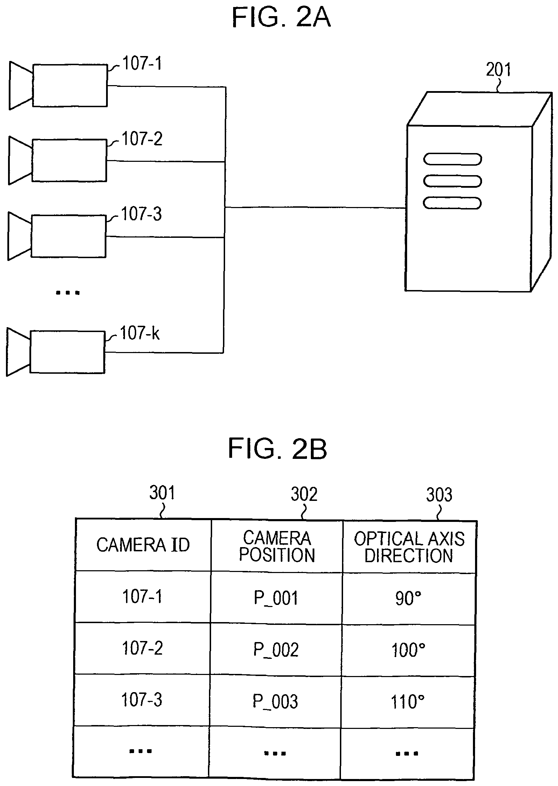

Next, an example of the configuration of a system according to this embodiment will be described with reference to Fig. 2A. As illustrated in Fig. 2A, the system according to this embodiment includes the cameras 107-1 to 107-k that are installed so as to surround the field 101 and that capture images of the inside of the field 101, and an information processing apparatus 201 that outputs a video image captured by a selected camera from among video images captured by these cameras. As described above, video images output by the information processing apparatus 201 are of two types: a video image from which the same perspective as offensive players have can be obtained and a video image from which the same perspective as defensive players of an opposing team have can be obtained. Video images output by the information processing apparatus 201 are transmitted to, for example, a broadcaster or a distributor using a network and used as materials in broadcasting or distribution. Two types of transmitted video images are presumed to be switched by a destination viewer.

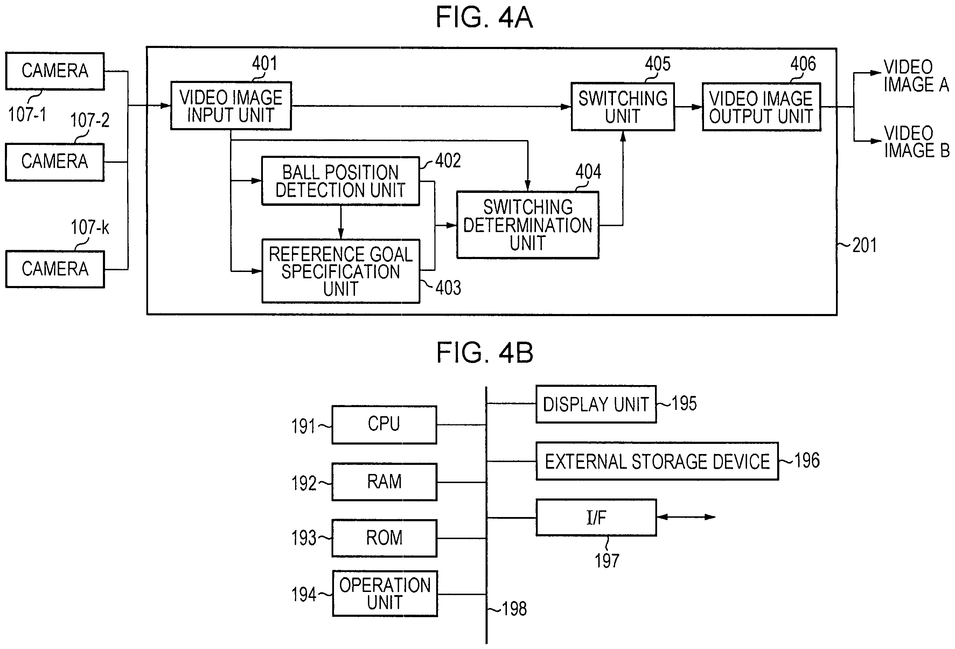

Next, an example of a functional configuration of the information processing apparatus 201 will be described with reference to a block diagram of Fig. 4A.

A video image input unit 401 receives video images transmitted from the cameras 107-1 to 107-k and then transfers the received video images to subsequent functional units. The video images may be moving images or sequential still images.

A ball position detection unit 402 detects a position of the ball 104 in the field 101.

A reference goal specification unit 403 specifies, as a reference goal, one of the goal 105 and the goal 106 in accordance with which of the area 102 and the area 103 the ball 104 is located in.

A switching determination unit 404 performs the above-described camera selection based on a positional relationship between the ball 104 and a reference goal and then determines whether a sequence of processes is to be performed in which camera switching is performed from a previously selected camera to a presently selected camera.

If the switching determination unit 404 determines that switching is to be performed, a switching unit 405 performs switching to a camera selected by the switching determination unit 404 and then transfers, to a subsequent video image output unit 406, a video image captured by the camera to which switching has been performed.

The video image output unit 406 outputs the video image transferred from the switching unit 405 to the outside world (a broadcaster or a distributor using a network in the above example). A destination is not limited to the outside world and may be, for example, a memory in the information processing apparatus 201 so that video images are accumulated in the memory.

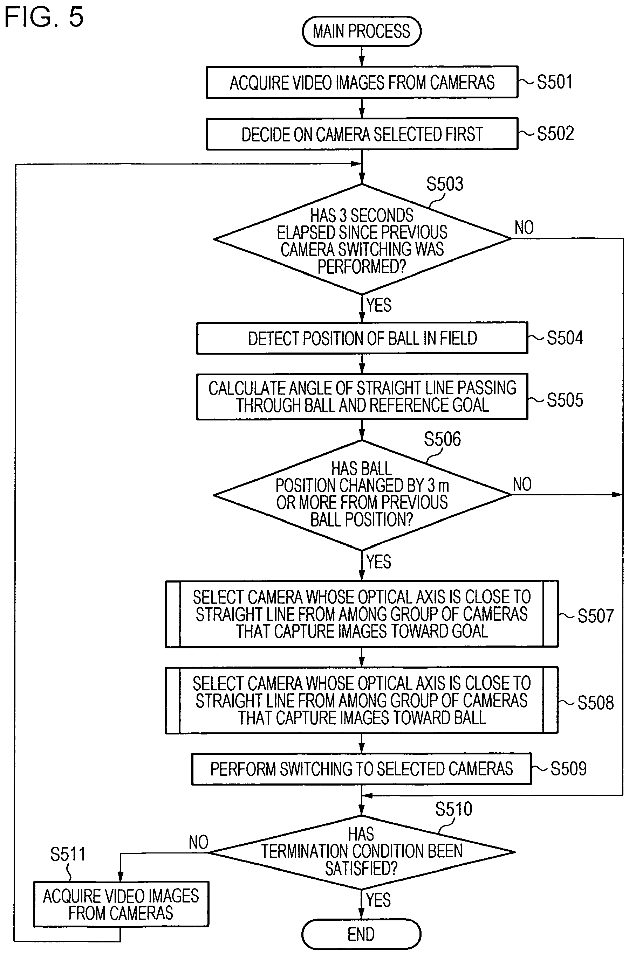

Next, a camera selection process performed by the information processing apparatus 201 will be described with reference to Fig. 5 illustrating a flowchart of the camera selection process.

### <Step S501>

The video image input unit 401 receives (acquires) video images transmitted from the cameras 107-1 to 107-k and then transfers the video images to subsequent functional units.

### <Step S502>

The switching determination unit 404 decides on a camera that is selected first from among the cameras 107-1 to 107-k. For example, the switching determination unit 404 decides on, as a camera selected first, a camera 107-f oriented from the center of the field 101 to a goal area. A camera selected first is not limited to the camera 107-f and may be another camera, or not one camera but two cameras may be decided as cameras selected first.

### <Step S503>

The switching determination unit 404 determines whether a specified time period (for example, 3 seconds in Fig. 5) has elapsed since previous camera switching was performed. For this determination, various methods are possible. For example, the switching determination unit 404 may measure, by using a timer function, a time period that has elapsed since previous camera switching was performed and may determine whether the measured time period has exceeded the specified time period. Alternatively, the switching determination unit 404 may count the number of input frames after previous camera switching and may determine whether (the counted number of input frames/a frame rate) has exceeded the specified time period.

As a result of the determination, if it is determined that the specified time period has elapsed since previous camera switching was performed, the process proceeds to step S504, and if it is determined that the specified time period has not elapsed, the process proceeds to step S510.

### <Step S504>

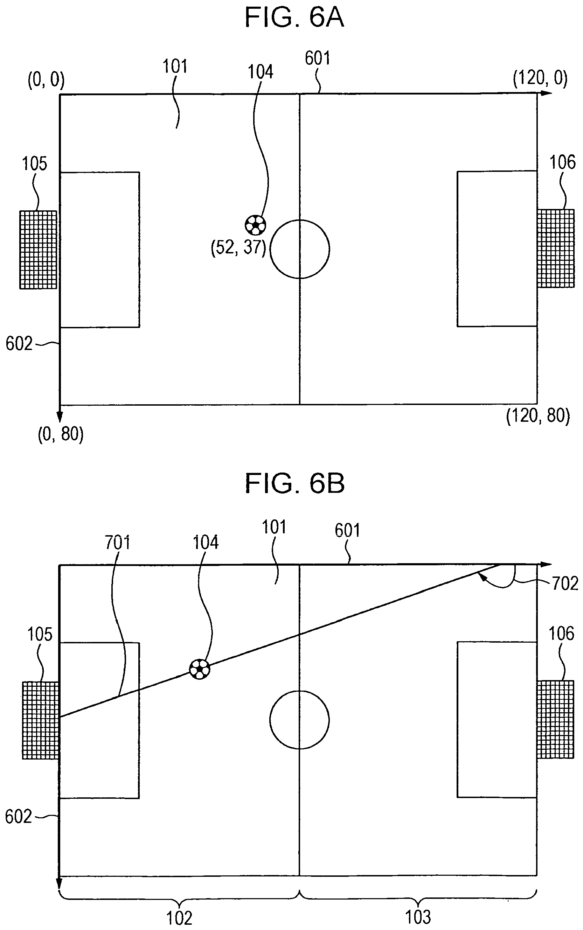

The ball position detection unit 402 detects a position of a ball in the field 101. For a method of detecting a position of the ball in the field 101, various methods are possible, and a method is not limited to a specific method. Here, one example of a ball position detection method applicable to this step will be described with reference to Fig. 6A. Fig. 6A illustrates a coordinate system based on the field 101 (field coordinate system).

In Fig. 6A, as a field coordinate system, a coordinate system is defined in which the top-left corner of the field 101 is a point of origin (0, 0), a touchline 601 on an upper side (on a back stand side, for example) is an X-axis, a goal line 602 on a left side (on the area 102 side) is a Y-axis, and 1 m is represented by 1. Furthermore, in Fig. 6A, coordinates of the top-right corner of the field 101 are (120, 0), coordinates of the bottom-left corner are (0, 80), and coordinates of the bottom-right corner are (120, 80).

On this occasion, a camera (crane camera) that overlooks the entirety of the field 101 and captures an image of it is provided above the field 101, and the ball position detection unit 402 can acquire a video image captured by the crane camera. That is, an image capturing range of the crane camera is wider than those of other cameras. The ball position detection unit 402 acquires, in advance, a video image (reference video image) of the field 101 where no ball has been located yet captured by the crane camera. Then, the ball position detection unit 402 detects, from a differential video image between a video image presently captured by the crane camera and the reference video image, a position (image coordinates) of the ball within the video image. A method of detecting a ball from a differential video image is known. For example, a spherical shape or circular shape, which is the shape of a ball, may be searched for by using edge detection, or a ball may be searched for by using color information of the ball. Then, when a correspondence relationship between a two-dimensional coordinate system on the video image captured by the crane camera and the field coordinate system is obtained in advance, a position in the field coordinate system corresponding to the detected image coordinates (a position of the ball in the field coordinate system) can be determined. In Fig. 6A, as a position in the field coordinate system corresponding to the image coordinates of the ball 104 detected from the video image captured by the crane camera, (52, 37) are determined.

The number of crane cameras is not limited to one and may be two or more. In this case, a position of the ball in the field coordinate system may be determined by using a triangulation technique using a plurality of crane cameras. Alternatively, a position of the ball in the field coordinate system may be determined without using any video images. For example, a sensor may be built in the ball and under the field (every square meter, for example), and a position of the ball may be determined from a position of a sensor under the field near the position of the ball. It goes without saying that, depending on the type of a sensor, a ball position detection method is not limited to this method.

### <Step S505>

If the ball is located in the area 102 (if an x-coordinate value of the ball 104 in the field coordinate system in the example of Fig. 6A is less than 60), the reference goal specification unit 403 sets the goal 105 to a reference goal. On the other hand, if the ball is located in the area 103 (if an x-coordinate value of the ball 104 in the field coordinate system in the example of Fig. 6A is not less than 60), the reference goal specification unit 403 sets the goal 106 to a reference goal. Note that positions of the goal 105 and the goal 106 in the field coordinate system (certain positions in the areas of the respective goals) are determined in advance.

Then, the switching determination unit 404 determines a straight line passing through the position of the ball determined in step S504 and the position of the reference goal and determines an angle of the determined straight line. For example, as illustrated in Fig. 6B, if the goal 105 is set to a reference goal, the switching determination unit 404 determines a straight line 701 passing through the position of the ball 104 and the position of the goal 105. Subsequently, the switching determination unit 404 determines, as an angle of the straight line 701, a clockwise angle 702 of the straight line 701 relative to the X-axis.

### <Step S506>

The switching determination unit 404 determines whether a difference between a position of the ball previously determined in step S504 and the position of the ball presently determined in step S504 is a specified distance (for example, 3 m in Fig. 5) or more. As a result of the determination, if a difference is the specified distance or more, the process proceeds to step S507, and if a difference is less than the specified distance, the process proceeds to step S510.

### <Step S507>

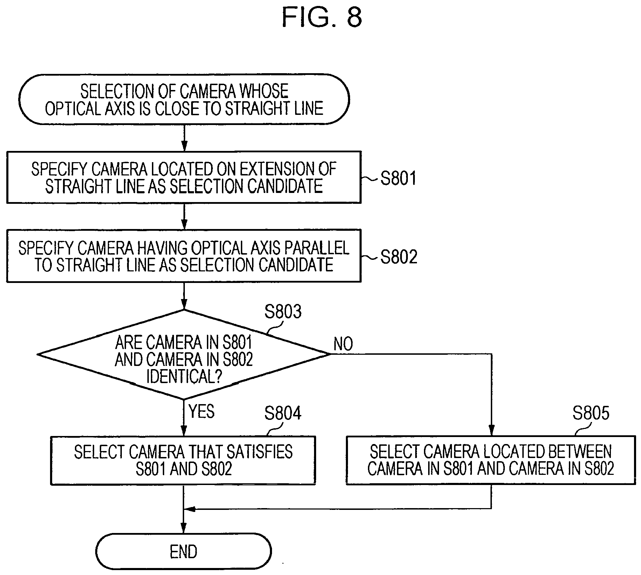

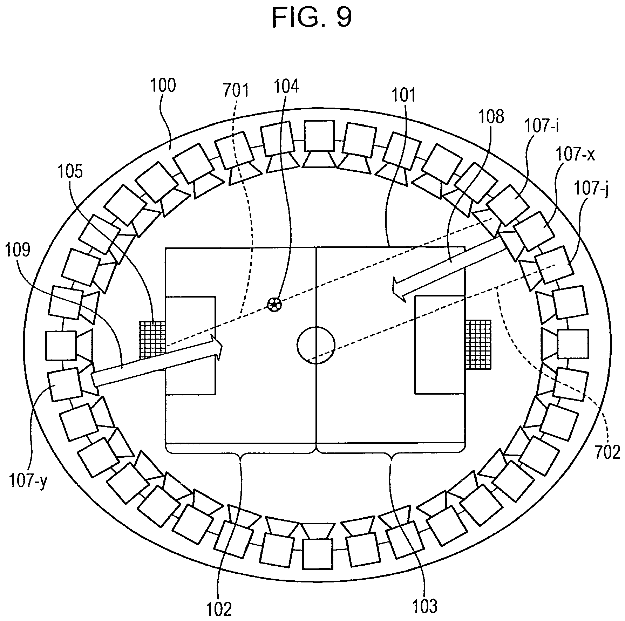

The switching determination unit 404 selects, from among the cameras 107-1 to 107-k, a camera that captures an image in a direction from the ball to the reference goal. Details of the process of step S507 will be described later with reference to Figs. 8 and 9.

### <Step S508>

The switching determination unit 404 selects, from among the cameras 107-1 to 107-k, a camera that captures an image in a direction from the reference goal to the ball. Details of the process of step S508 will be described later with reference to Figs. 8 and 9.

### <Step S509>

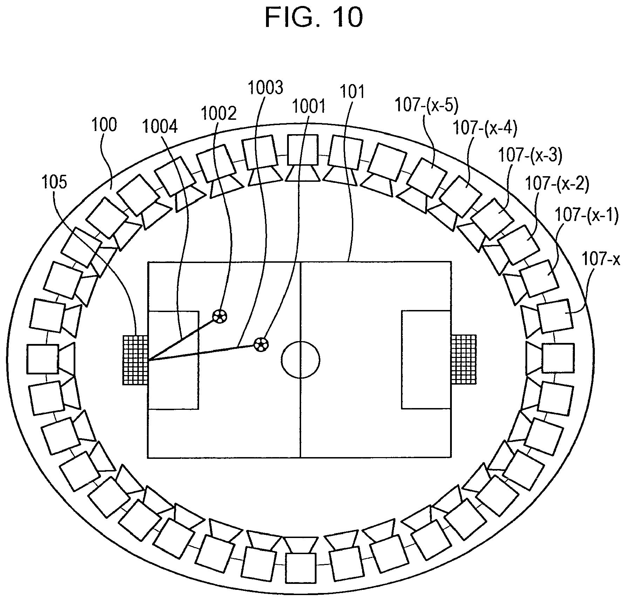

The switching unit 405 performs switching to the camera selected in step S507 and the camera selected in step S508 and then transfers, to the subsequent video image output unit 406, video images captured by the cameras to which switching has been performed. For example, as illustrated in Fig. 10, when the ball changes from a ball position 1001 to a ball position 1002, a straight line connecting the ball and the reference goal changes from a straight line 1003 to a straight line 1004. With this change, switching is performed from the camera 107-x previously selected in step S507 for the ball position 1001 to a camera 107-(x - 5) for the ball position 1002. Also, with respect to a camera selected in step S508 that captures an image in a direction from the reference goal to the ball, switching is performed from a camera previously selected in step S508 for the ball position 1001 to a camera for the ball position 1002.

With respect to camera switching, a video image captured by the camera 107-x may be switched to a video image captured by the camera 107-(x - 5) directly like cut editing, and video images captured by cameras 107-(x - 1) to 107-(x - 4) between the camera 107-x and the camera 107-(x - 5) may also be inserted sequentially by several frames. Although video image signals from the respective cameras are assumed to be synchronized at the same timing so that a video image is not distorted due to the timing of switching, a mechanism may be provided in which the lag in switching is reduced so that a video image is not distorted.

### <Step S510>

Unless a termination condition for ending the process is satisfied, the process proceeds to step S511, and if the termination condition is satisfied, the process according to the flowchart of Fig. 5 ends. A termination condition is not limited to a specific condition and may be a condition that a termination instruction is input by a user operating an operation unit, which is not illustrated, or a condition that the current time reaches a predetermined ending time.

### <Step S511>

The video image input unit 401 receives (acquires) video images transmitted from the cameras 107-1 to 107-k and then transfers the video images to the subsequent functional units.

Next, details of the process of each of the above step S507 and step S508 will be described with reference to a flowchart of Fig. 8.

### <Step S801>

The switching determination unit 404 specifies, as a selection candidate, a camera closest to the straight line determined in step S505 with reference to a table illustrated in Fig. 2B in which installation positions (camera positions) and optical axis directions in the field coordinate system of the respective cameras 107-1 to 107-k are registered. The table of Fig. 2B manages, for each of the cameras 107-1 to 107-k, identification information (a camera ID 301 in Fig. 2B) unique to the camera, an installation position (a camera position 302) in the field coordinate system, and an optical axis direction 303 that is a clockwise angle relative to the X-axis in the field coordinate system. Here, the field is represented in two dimensions, and the height of the ball and an elevation angle of the camera that is an up-and-down direction in which the camera captures an image are not taken into consideration.

For example, assume that the ball 104 is located in the area 102. At this time, in step S507, a camera installed at an installation position closest to the straight line is specified as a selection candidate from among the cameras 107-1 to 107-m (cameras whose optical axis directions relative to the direction from the ball to the reference goal are an angle within ± 90°). On the other hand, in step S508, a camera installed at an installation position closest to the straight line is specified as a selection candidate from among the cameras 107-(m + 1) to 107-k (cameras whose optical axis directions relative to the direction from the reference goal to the ball are an angle within ± 90°).

Also, assume that the ball 104 is located in the area 103. At this time, in step S507, a camera installed at an installation position closest to the straight line is specified as a selection candidate from among the cameras 107-(m + 1) to 107-k (cameras whose optical axis directions relative to the direction from the ball to the reference goal are an angle within ± 90°). On the other hand, in step S508, a camera installed at an installation position closest to the straight line is specified as a selection candidate from among the cameras 107-1 to 107-m (cameras whose optical axis directions relative to the direction from the reference goal to the ball are an angle within ± 90°).

### <Step S802>

The switching determination unit 404 specifies, as a selection candidate, a camera having an optical axis direction that is most parallel to the direction of the straight line determined in step S505 with reference to the table of Fig. 2B. That is, the switching determination unit 404 specifies, from among optical axis directions of the respective cameras registered in the table of Fig. 2B, an optical axis direction closest to the angle of the straight line determined in step S505 and specifies a camera corresponding to the specified optical axis direction as a selection candidate. Furthermore, the switching determination unit 404 specifies, from among optical axis directions of the respective cameras registered in the table of Fig. 2B, an optical axis direction closest to (the angle of the straight line determined in step S505 + 180°) and specifies a camera corresponding to the specified optical axis direction as a selection candidate.

That is, in the case of step S507, an image capturing apparatus whose optical axis direction is a direction closer to the direction from the position of the ball to the position of the goal is selected as a selection candidate. In the case of step S508, an image capturing apparatus whose optical axis direction is a direction closer to a direction opposite to the direction is selected as a selection candidate.

### <Step S803>

The switching determination unit 404 determines whether the camera (camera ID) specified as a selection candidate in step S801 and the camera (camera ID) specified as a selection candidate in step S802 are identical.

In the case of step S507, it is determined whether the camera (camera ID) specified as a selection candidate in step S801 for step S507 and the camera (camera ID) specified as a selection candidate in step S802 for step S507 are identical. In the case of step S508, it is determined whether the camera (camera ID) specified as a selection candidate in step S801 for step S508 and the camera (camera ID) specified as a selection candidate in step S802 for step S508 are identical. As a result of each determination, if they are identical, the process proceeds to step S804, and if they are not identical, the process proceeds to step S805.

### <Step S804>

The switching determination unit 404 selects the camera specified as a selection candidate in step S801 or step S802.

### <Step S805>

The switching determination unit 404 selects a camera closest to an intermediate position between the installation position (which is specified from the table of Fig. 2B) of the camera specified as a selection candidate in step S801 and the installation position (which is specified from the table of Fig. 2B) of the camera specified as a selection candidate in step S802. For example, as illustrated in Fig. 9, assume that a camera located on the extension of the straight line 701 connecting the ball 104 and the reference goal (goal 105 in Fig. 9) is a camera 107-i, and that a camera having an optical axis direction closest to the direction of the straight line 701 is a camera 107-j. At this time, the camera 107-x closest to an intermediate position between the installation position of the camera 107-i and the installation position of the camera 107-j is selected. In the case where an arrangement order in which cameras are arranged is registered in the information processing apparatus 201 in advance, a camera between the camera 107-i and the camera 107-j may be selected in this arrangement order without referring to installation positions as described above. Note that, in both step S804 and step S805, both the reference goal and the ball are assumed to be contained within the field of view, within which objects to be imaged exist, of a camera to be selected.

If the camera specified as a selection candidate in step S801 and the camera specified as a selection candidate in step S802 are adjacent to each other, one of these cameras may be selected.

Thus, according to this embodiment, if a position of the ball changes greatly, camera switching can be performed by using the relationship of the position of the ball and a position of a goal. A video image of a subject toward the goal, that is, a video image of an offensive team, and a video image of a subject with his/her back to the goal, that is, a video image of a defensive team can be output in accordance with a position of the ball.

In this embodiment, although two types of video images are output in view of supporting an opposing team, only a video image of a team going on the offensive may be output continuously, or only a video image of a team going on the defensive may be output continuously. When the team's roles of offense and defense switch, cameras between a camera which is to be switched and a camera to which the camera has been switched may be switched sequentially, as described in the example of Fig. 10.

Furthermore, in this embodiment, although a reference goal is set by determining which of areas the ball in the field is located in, a reference goal may be set by using another method. For example, if a direction in which an opposing team goes on the offensive is already known, a player holding the ball is detected by using, for example, the color of the uniforms of players and facial recognition, and it is thus determined which team is going on the offensive. Then, the goal of a team playing against the team holding the ball, that is, the goal of a team playing against the team going on the offensive may be set to a reference goal.

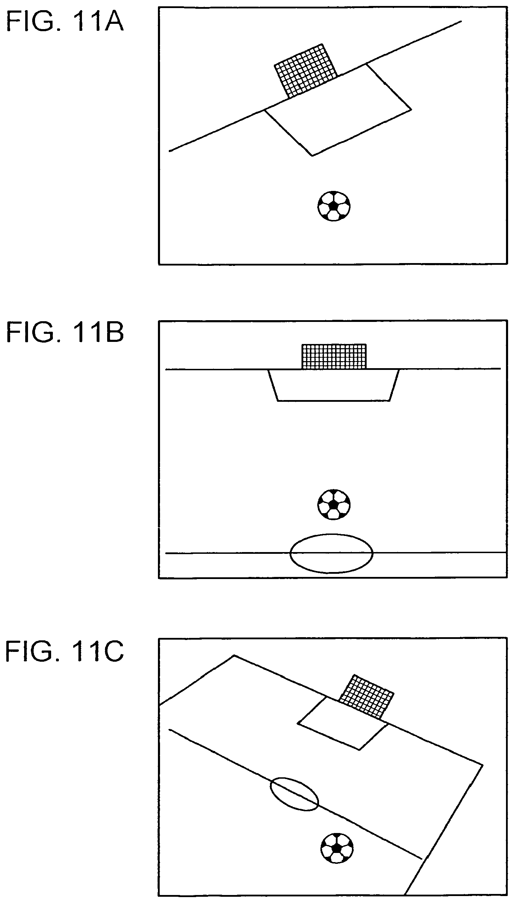

When camera switching is performed, as illustrated in Figs. 11A to 11C, changes in size and position of the ball in video images captured by a camera which is to be switched and a camera to which the camera has been switched may fall within respective certain ranges. Specifically, video images captured by respective cameras are cropped so that the balls imaged by the respective cameras are made uniform in position and size in a display screen. This can reduce a visual shock due to the amounts of change in size and position of the ball at the time of camera switching. On this occasion, to maintain output resolution of cropped video images, cameras with higher resolution than output video images have may be used, or the cameras may have an optical zoom function. Similarly, cropping may be performed so that the size of not the ball but each goal falls within a certain range, or a zoom magnification may be changed.

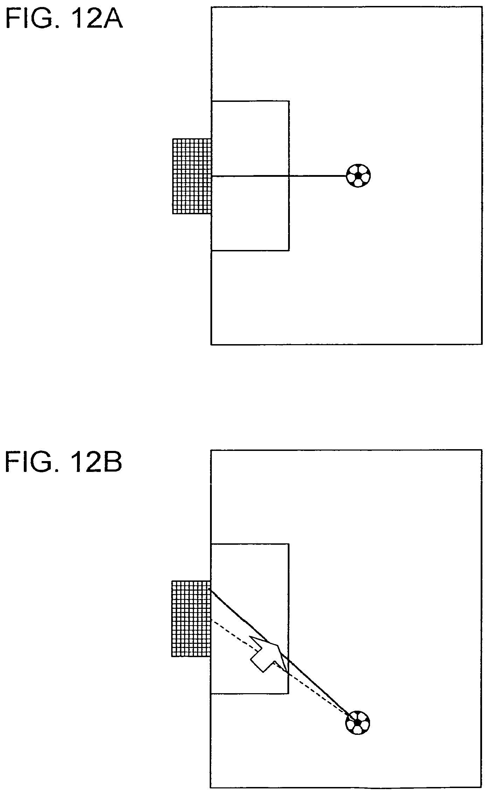

In the above description, since a position of each goal is a certain position in the area of the goal, the center of the width of the goal may be the position of the goal as illustrated in Fig. 12A, or a position of an end of the width of the goal may be the position of the goal as illustrated in Fig. 12B. An object used as the position of the goal may be appropriately switched. For example, as illustrated in Fig. 12B, if the ball is located on the lower side of Fig. 12B, the upper side of the goal on the opposite side of the ball may be used as the position of the goal. In this way, appropriately changing the position of the goal increases the number of camera selection candidates and also provides an angle with respect to the goal, thereby enabling the goal to be located within the angle of view.

Depending on the video image, the ball may not be able to be seen because the ball is hidden behind a player. Thus, it may be determined, through a ball detection process, whether the ball appears in a video image captured by a camera adjacent to a selected camera, and switching to a camera that captures a video image in which both the ball and a goal appear may be performed.

In this embodiment, although the foregoing description is given by taking soccer as an example, the system according to this embodiment may be used in ball games in which two teams try to score a goal, such as handball, rugby, American football, basketball, and ice hockey. That is, the configuration according to this embodiment is applicable not only to an outdoor stadium but also to an indoor stadium, such as a gymnasium.

In this embodiment, although the example is given where a camera is selected on the basis of a straight line passing through a position of the ball and a position of a goal, one or more embodiments of the present disclosure are not limited to this example. In another method, for example, a table in which a position of the ball and a camera to be selected are associated with each other on the basis of the position of each goal acquired in advance may be held. This enables a camera to be selected on the basis of a position of the ball specified from a video image captured by a crane camera or the like and the above-described table. In this example too, the information processing apparatus selects a camera on the basis of the relationship between a position of the ball and a position of the goal. The same goes for other embodiments to be described.

In this embodiment, although the example is given where a camera is selected on the basis of a positional relationship between the ball and a goal, a positional relationship is not limited to a positional relationship between the ball and the goal. For example, a camera may be selected on the basis of a positional relationship between a specific player and a goal, or a camera may be selected on the basis of a positional relationship between a specific player and the ball. Furthermore, a camera may be selected on the basis of a positional relationship between a first specific player and a second specific player. That is, a camera is selected on the basis of a positional relationship between a first predetermined object and a second predetermined object. A camera does not necessarily have to be selected from among the plurality of cameras 107. That is, this embodiment may be applied to a virtual viewpoint image system so that a virtual viewpoint is automatically moved on the basis of a positional relationship between a first predetermined object (for example, a ball) and a second predetermined object (for example, a goal). In this case, as a virtual viewpoint moves, the cameras 107 that capture a captured image used for generating a virtual viewpoint image corresponding to the virtual viewpoint are changed. The same goes for a second embodiment and later embodiments.

### Second Embodiment

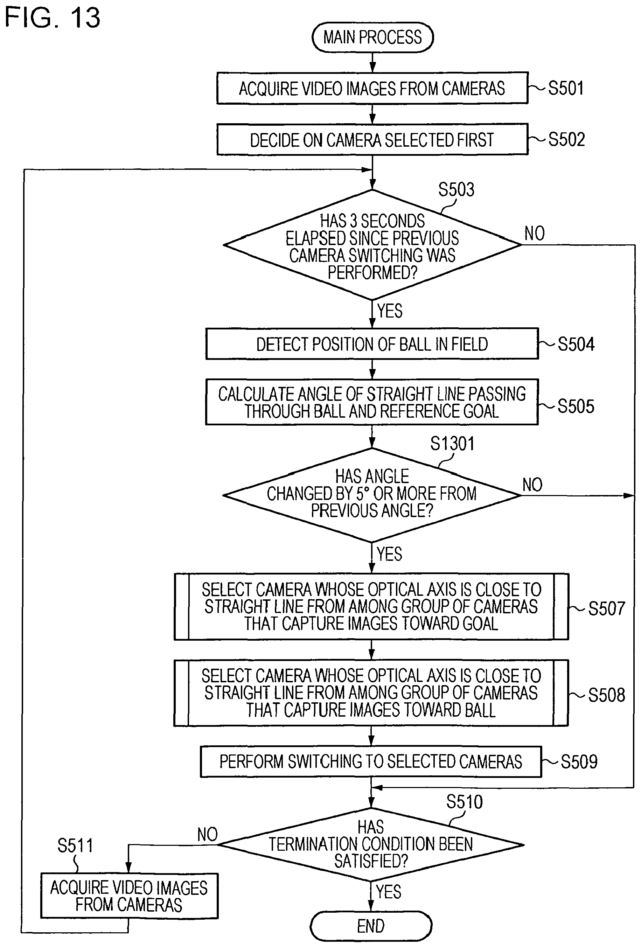

In this embodiment and the later embodiments, a difference between each embodiment and the first embodiment will be predominantly described, and other details are the same as those in the first embodiment unless otherwise described below. This embodiment differs from the first embodiment in that a process of step S1301 in Fig. 13 is performed in place of the process of step S506 (the process of determining whether a difference between a position of the ball previously determined in step S504 and a position of the ball presently determined in step S504 is a specified distance or more). A camera selection process performed by the information processing apparatus 201 according to this embodiment will be described with reference to a flowchart of Fig. 13.

In step S1301, the switching determination unit 404 determines whether a difference between an angle previously determined in step S505 and the angle presently determined in step S505 is a specified angle (for example, 5° in Fig. 13) or more. As a result of the determination, if a difference between an angle previously determined in step S505 and the angle presently determined in step S505 is the specified angle or more, the process proceeds to step S507, and if a difference is less than the specified angle, the process proceeds to step S510.

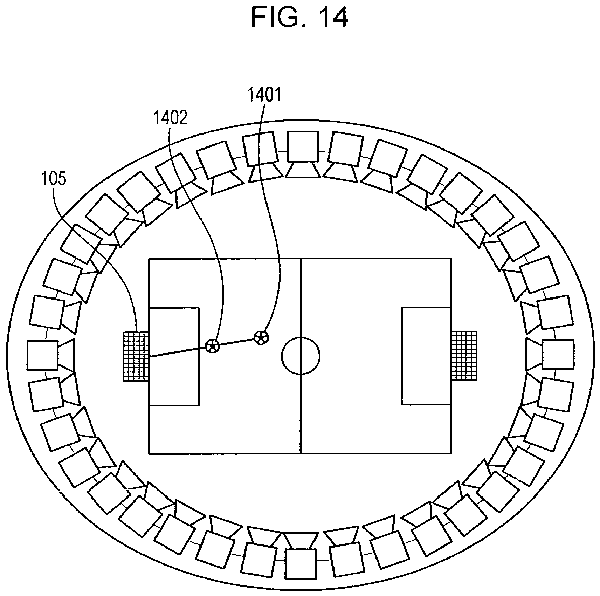

Thus, according to this embodiment, if there is no change in optical axis direction even when a position of the ball changes, camera switching does not have to be performed, thereby omitting an unnecessary switching process. Fig. 14 illustrates an example where, although a position of the ball changes (from a ball position 1401 to a ball position 1402), an angle of a straight line connecting the ball position 1401 (1402) and the goal 105 does not change. Although a position changes from the ball position 1401 to the ball position 1402, an angle of the straight line does not change (a change in the slope of the straight line is less than a threshold), and thus camera switching is not performed. If a change in the slope of the straight line is the threshold or more, camera switching is performed.

### Third Embodiment

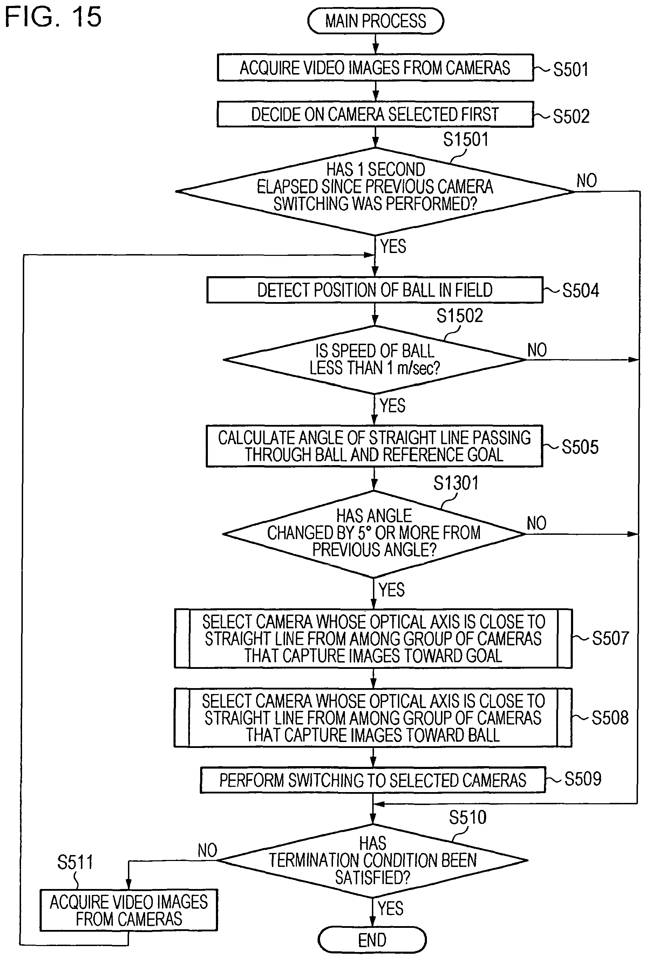

This embodiment differs from the first embodiment in that a process according to a flowchart of Fig. 15 is performed in place of the process according to the flowchart of Fig. 5.

### <Step S1501>

The switching determination unit 404 determines whether a specified time period (for example, 1 second in Fig. 15) has elapsed since previous camera switching was performed. As a result of the determination, if it is determined that the specified time period has elapsed since previous camera switching was performed, the process proceeds to step S504, and if it is determined that the specified time period has not elapsed, the process proceeds to step S510.

### <Step S1502>

The switching determination unit 404 determines a movement speed of the ball by multiplying a difference between a position of the ball previously determined in step S504 and the position of the ball presently determined in step S504 by a frame rate (frames/second). A method of determining a movement speed of the ball is not limited to this method. Then, the switching determination unit 404 determines whether the determined movement speed of the ball is not less than a specified speed (for example, 1 m/sec in Fig. 15). As a result of the determination, if the determined movement speed of the ball is not less than the specified speed, the process proceeds to step S510, and if the determined movement speed of the ball is less than the specified speed, the process proceeds to step S505.

Thus, according to this embodiment, if a movement speed of the ball is less than a threshold, camera switching can be performed. If a movement speed of the ball is not less than a certain speed, camera switching is not able to keep up with the movement speed, and a situation may occur where the ball does not appear even if camera switching is performed. For this reason, if the ball moves at the certain speed or greater, camera switching is not performed even if a position of the ball or an angle which the ball forms with a goal changes, and if the speed of the ball becomes less than the threshold, camera switching is performed. If the movement of the ball is detected, a zoom magnification may be set to achieve a wide angle of view so that the whole situation can be understood.

### Fourth Embodiment

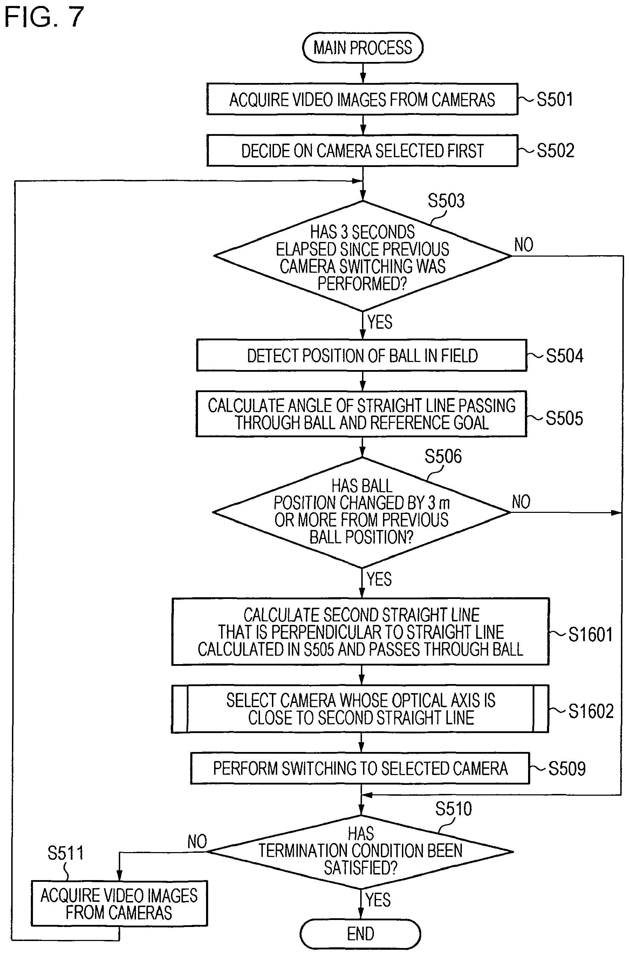

This embodiment differs from the first embodiment in that a process according to a flowchart of Fig. 7 is performed in place of the process according to the flowchart of Fig. 5.

### <Step S1601>

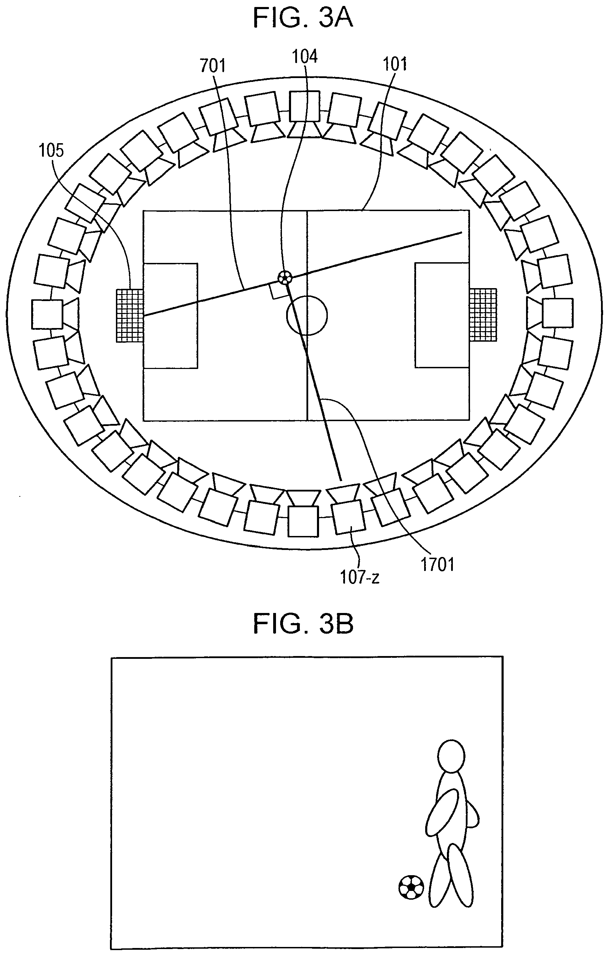

The switching determination unit 404 determines a straight line (second straight line) that passes through the position of the ball detected in step S504 and intersects with the straight line determined in step S505 at right angles (the angle of the straight line + 90° clockwise). In the case of Fig. 3A, a second straight line 1701 that passes through a position of the ball 104 and intersects with the straight line 701 passing through the ball 104 and the goal 105 (reference goal) at right angles is determined.

### <Step S1602>

The switching determination unit 404 selects, from among the cameras 107-1 to 107-k, a camera having an optical axis direction closest to an angle of the straight line determined in step S1601 (the angle of the straight line determined in step S505 + 90° clockwise) with reference to the table of Fig. 2B. In the case of Fig. 3A, a camera 107-z is selected as a camera having an optical axis direction closest to an angle of the second straight line 1701 (the angle of the straight line determined in step S505 + 90° clockwise). The process of step S1602 is a process in which the straight line in the flowchart of Fig. 8 is the second straight line.

As a second straight line, a straight line that passes through the position of the ball detected in step S504 and intersects with the straight line determined in step S505 at right angles (the angle of the straight line + 90° counterclockwise) may be used, or the two types of second straight lines may be used so that they are appropriately switched.

Thus, according to this embodiment, since a camera having an optical axis direction close to an angle of a second straight line whose starting point is the ball and which is perpendicular to a straight line passing through a goal and the ball is selected, a video image of a player toward the goal and the ball captured from the side can be output continuously. As illustrated in Fig. 3B, a camera may be selected so that a position of the ball in a video image is not located in the center in a horizontal direction and the centroid of the ball position is located on the side opposite to an opponent's goal.

### Fifth Embodiment

Any of the functional units included in the information processing apparatus 201 illustrated in Fig. 4A may be implemented by one or more hardware devices, but may be implemented by software (computer program). In this case, any computer apparatus capable of executing this computer program can be used in the information processing apparatus 201. An example of a hardware configuration of a computer apparatus usable in the information processing apparatus 201 will be described with reference to a block diagram of Fig. 4B.

A central processing unit (CPU) 191 controls operation of an entire computer apparatus by executing a process by using a computer program and data stored in a random access memory (RAM) 192 and also executes or controls the above-described processes to be executed by the information processing apparatus 201.

The RAM 192 has areas for storing a computer program and data loaded from a read only memory (ROM) 193 or an external storage device 196 and video images received from external devices (cameras 107-1 to 107-k) via an interface (I/F) 197. The RAM 192 further has a work area used when the CPU 191 executes each process. Thus, the RAM 192 can appropriately provide each area.

The ROM 193 stores settings data of the computer apparatus that does not have to be rewritten and a computer program (boot program or the like).

An operation unit 194 includes user interfaces, such as a mouse and a keyboard, and the user can operate the operation unit 194 to input various types of instructions to the CPU 191.

A display unit 195 includes a cathode ray tube (CRT), a liquid crystal display screen, or the like and can display a result of a process performed by the CPU 191 using, for example, an image and/or characters. The operation unit 194 and the display unit 195 may be integrated to form a touch panel.

The external storage device 196 is a mass storage device typified by a hard disk drive. The external storage device 196 stores an operating system (OS), a computer program for causing the CPU 191 to execute or control the above-described processes to be executed by the information processing apparatus 201, and data. The computer program contains computer programs for causing the CPU 191 to execute or control functions of the video image input unit 401, the ball position detection unit 402, the reference goal specification unit 403, the switching determination unit 404, the switching unit 405, and the video image output unit 406. The data contains data used as known information in the above descriptions.

The computer program and data stored in the external storage device 196 are appropriately loaded into the RAM 192 in accordance with control performed by the CPU 191 and are to be dealt with by the CPU 191.

The cameras 107-1 to 107-k are connected to the I/F 197, and video images captured by the cameras 107-1 to 107-k are transmitted to the RAM 192 or the external storage device 196 via the I/F 197.

All of the CPU 191, the RAM 192, the ROM 193, the operation unit 194, the display unit 195, the external storage device 196, and the I/F 197 are connected to a bus 198. Note that the configuration illustrated in Fig. 4B is merely an example and a hardware configuration is not limited to this configuration. Some or all of the above-described embodiments or modifications may be appropriately combined and used.

In the above-described embodiments, the example is given where at least one image capturing apparatus is selected as a selected image capturing apparatus from among a plurality of image capturing apparatuses and where a video image captured by the selected image capturing apparatus is displayed. Note that one or more embodiments of the present disclosure are not limited to this example. For example, the configuration according to this embodiment is applicable to a virtual viewpoint image system. In the case where the configuration according to this embodiment is applied to a virtual viewpoint image system, the switching determination unit 404 illustrated in Fig. 4A decides on a position and a direction of a virtual viewpoint involved in generating a virtual viewpoint image on the basis of a positional relationship between a ball and a goal. A virtual viewpoint image is an image generated as if the image were captured from a virtual viewpoint different from a viewpoint where a real camera captures an image. A virtual viewpoint image can be generated by using captured images captured by the plurality of cameras 107 arranged as illustrated in Fig. 1.

The switching determination unit 404 illustrated in Fig. 4A determines a virtual viewpoint, and the switching unit 405 moves the virtual viewpoint in accordance with a result of the determination. Then, the video image output unit 406 generates a virtual viewpoint image from the virtual viewpoint decided by the switching determination unit 404 and captured images captured by the plurality of cameras 107 received by the video image input unit 401. Although, in the case where the cameras 107 are switched, excessively frequent switching between viewpoints is likely to reduce visibility, in the case of a virtual viewpoint, a change in virtual viewpoint on a real-time basis is unlikely to reduce visibility. Thus, in the case where a virtual viewpoint is moved, a determination in step S503 in Fig. 5 is not made, and the process directly proceeds to step S504 after steps S502 and S511. Also, step S506 in Fig. 5 is skipped, and the process proceeds from step S505 to step S507 directly. Note that the appropriate timing and conditions for moving a viewpoint vary according to contents and a user's intention, and thus one or more embodiments of the present disclosure do not necessarily have to be limited to a specific method.

Furthermore, in the above-described embodiments, although the example is given where, as illustrated in Fig. 4A, the switching determination unit 404 that selects a camera and the video image output unit 406 are included in one information processing apparatus 201, the configuration is not limited to this example, and they may be included in respective information processing apparatuses 201. That is, a first information processing apparatus 201 decides on a camera (or a virtual viewpoint) on the basis of a positional relationship between a first predetermined object (for example, a ball) and a second predetermined object (for example, a goal) and outputs the decision to a second information processing apparatus 201. Then, the second information processing apparatus 201 acquires the decision on the camera (or the virtual viewpoint) from the first information processing apparatus 201 and also acquires captured images from the plurality of cameras 107. Then, the second information processing apparatus 201 outputs, to a display device, an image corresponding to the decision acquired from the first information processing apparatus 201. In an embodiment in which the first information processing apparatus 201 and the second information processing apparatus 201 are provided as described above, the first information processing apparatus 201 performs a process (transmission control process) of controlling image data output by the second information processing apparatus 201.

According to the configuration according to this embodiment, of a plurality of cameras installed in a stadium, a camera that is more suitable for representing the situation of a game can be selected.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus comprising:
acquisition means configured to acquire positional relationship information regarding a positional relationship between a first predetermined object and a second predetermined object detected from at least one of captured images captured by a plurality of cameras for capturing images of a subject from a plurality of directions;
camera decision means (404) configured to decide on at least one camera that captures an image to be displayed from among the plurality of cameras by using the positional relationship information of the first and second predetermined objects acquired by the acquisition means; and
transmission control means (191) configured to perform control so that a display-target image based on a captured image captured by the at least one camera decided by the camera decision means (404) is transmitted to a display device (195).

2. The information processing apparatus according to Claim 1, further comprising
viewpoint decision means (404) configured to decide on a virtual viewpoint corresponding to the image to be displayed, by using the positional relationship information of the first and second predetermined objects acquired by the acquisition means,
wherein the camera decision means (404) decides on the at least one camera from among the plurality of cameras, based on a position of the virtual viewpoint decided by the viewpoint decision means (404), and
wherein the transmission control means (191) performs control so that a virtual viewpoint image based on a captured image captured by the at least one camera decided by the camera decision means (404) is transmitted to the display device (195).

3. The information processing apparatus according to Claim 2, further comprising
generation means (406) configured to generate a virtual viewpoint image by using position information of the virtual viewpoint decided by the viewpoint decision means (404) and a captured image captured by the at least one camera decided by the camera decision means (404),
wherein the transmission control means (191) performs control so that the virtual viewpoint image generated by the generation means (406) is transmitted to the display device (195) as the display-target image.

4. The information processing apparatus according to Claim 1,
wherein the camera decision means (404) decides on a camera that captures the image to be displayed from a position of the first predetermined object and a position of the second predetermined object, and
wherein the transmission control means (191) performs control so that a captured image captured by the camera decided by the camera decision means (404) is transmitted to the display device (195) as the display-target image.

5. The information processing apparatus according to Claim 4,
wherein the camera decision means (404) decides on, as the camera that captures the image to be displayed, a camera specified based on a direction from the position of the first predetermined object to the position of the second predetermined object.

6. The information processing apparatus according to Claim 5,
wherein the camera decision means (404) decides on, as the camera that captures the image to be displayed, a camera closest to an extension of a line segment extending from the position of the first predetermined object to the position of the second predetermined object from among the plurality of cameras.

7. The information processing apparatus according to Claim 5,
wherein the camera decision means (404) decides on, as the camera that captures the image to be displayed, a camera closest to an extension of a line segment extending from the position of the second predetermined object to the position of the first predetermined object from among the plurality of cameras.

8. The information processing apparatus according to Claim 5,
wherein the camera decision means (404) decides on, as the camera that captures the image to be displayed, a camera closest to a second line segment intersecting with a first line segment extending from the position of the first predetermined object to the position of the second predetermined object at right angles from among the plurality of cameras.

9. The information processing apparatus according to Claim 1,
wherein the camera decision means (405) changes, in accordance with a change in position of at least one of the first and second predetermined objects, the at least one camera that captures the image to be displayed, and
wherein the camera decision means (405) does not change the at least one camera for a predetermined time period after the at least one camera has been decided.

10. The information processing apparatus according to Claim 1, further comprising
zoom control means configured, if the camera decision means (405) changes, in accordance with a change in position of at least one of the first and second predetermined objects, the at least one camera that captures the image to be displayed, to change a zoom magnification of a camera to which the at least one camera has been changed so that an amount of change in size of the at least one of the first and second predetermined objects in a display image displayed by the display device (195) is reduced.

11. An information processing method comprising:
acquiring positional relationship information regarding a positional relationship between a first predetermined object and a second predetermined object detected from at least one of captured images captured by a plurality of cameras for capturing images of a subject from a plurality of directions;
deciding on at least one camera that captures an image to be displayed from among the plurality of cameras by using the positional relationship information of the first and second predetermined objects; and
performing control so that a display-target image based on a captured image captured by the decided at least one camera is transmitted to a display device (195).

12. The information processing method according to Claim 11, further comprising
deciding on a virtual viewpoint corresponding to the image to be displayed, by using the positional relationship information of the first and second predetermined objects,
wherein the at least one camera is decided from among the plurality of cameras, based on a position of the decided virtual viewpoint, and a virtual viewpoint image based on a captured image captured by the decided at least one camera is transmitted to the display device (195).

13. The information processing method according to Claim 12, further comprising
generating a virtual viewpoint image by using position information of the virtual viewpoint and a captured image captured by the at least one camera decided based on the position of the virtual viewpoint,
wherein the virtual viewpoint image is transmitted to the display device (195) as the display-target image.

14. A computer-readable storage medium storing a program for causing a computer to execute a method, the method comprising:
acquiring positional relationship information regarding a positional relationship between a first predetermined object and a second predetermined object detected from at least one of captured images captured by a plurality of cameras for capturing images of a subject from a plurality of directions;
deciding on at least one camera that captures an image to be displayed from among the plurality of cameras by using the positional relationship information of the first and second predetermined objects; and
performing control so that a display-target image based on a captured image captured by the decided at least one camera is transmitted to a display device (195).

15. The computer-readable storage medium according to Claim 14, wherein the method further comprises
deciding on a virtual viewpoint corresponding to the image to be displayed, by using the positional relationship information of the first and second predetermined objects, and
wherein the at least one camera is decided from among the plurality of cameras, based on a position of the decided virtual viewpoint, and a virtual viewpoint image based on a captured image captured by the decided at least one camera is transmitted to the display device (195).

16. The computer-readable storage medium according to Claim 15, wherein the method further comprises
generating a virtual viewpoint image by using position information of the virtual viewpoint and a captured image captured by the at least one camera decided based on the position of the virtual viewpoint, and
wherein the virtual viewpoint image is transmitted to the display device (195) as the display-target image.
